# EUROPEAN PATENT APPLICATION

(11) **EP 4 538 901 A1**
(43) Date of publication of application: **16.04.2025**
(21) Application number: 24203131.8
(22) Date of filing: 27.09.2024
(51) Int. Cl.: G06F 16/2452, G06F 16/2453

(54) **BREAKING CHANGE DETECTION FOR FEDERATED SYSTEMS**

(30) Priority: 13.10.2023 US 202318379884
(71) Applicant: eBay Inc., San Jose, CA 95125 (US)
(72) Inventor: BANDARCHUK, Aliaksandr Sergeyevich, San Jose, 95125 (US)
(74) Representative: Müller-Boré & Partner Patentanwälte PartG mbB

(57) **Abstract**

Systems and methods provide for managing changes to federated systems. In accordance with some aspects, a change to a federated system is received. A historical query is accessed from a query store storing information regarding queries received by the federated system. A query plan evaluation is performed for the historical query based on the change to the federated system, and an action is caused to be performed for the change based on the query plan evaluation.

## Description

### BACKGROUND

Federated systems (e.g., systems using GraphQL) provide a distributed architecture approach that enables efficient data management and integration across multiple data sources, referred to as subgraph services. In this model, each subgraph service maintains its own independent subgraph schema describing the data it manages. The system composes the individual subgraph schemas into a single, cohesive, and interconnected supergraph schema. Consumers of a federated system can submit queries to a gateway as a single endpoint, which can employ the supergraph schema to generate query plans to pull data from multiple subgraph services and return a response. The gateway can analyze each query and generate a query plan at runtime based on, for instance, core library version, composition version, and subgraph schemas.

### SUMMARY

Some aspects of the present technology relate to, among other things, managing changes to a federated system. The changes can be, for instance, changes to a gateway of the federated system, changes to existing subgraph services of the federated system, and/or additions of new subgraph services to the federated system. Aspects of the technology described herein detect when breaking changes are presented that will impact performance of queries processed by the federated system, including changes that will prevent existing queries from being processed or that adversely impact query performance.

In accordance with some aspects, information regarding queries received by the federated system are persisted to a query store to facilitate the evaluation of federated system changes. For instance, queries received by the federated system can be stored in the query store as historical queries, while query plans generated for each query can be stored in association with each historical query as a historical query plan. Query metadata can also be persisted in the query store for each historical query.

When a change to a federated system is received, a query plan evaluation is performed for at least a portion of the historical queries in the query store to determine whether and/or to what extent the change will impact the ability to continue processing queries corresponding with the historical queries. For a given historical query, the query plan evaluation includes determining whether a new query plan can be generated for the historical query given the change. If new query plan cannot be generated based on the change, the change can be blocked from implementation and/or a notification regarding the change and its impact can be sent to one or more relevant entities. When a new query plan can be generated, a performance impact of the new query plan is determined. An action regarding the change is selected depending on the performance impact of the new query plan, such as for instance, allowing the change to be implemented (dependent on query plan evaluations of other historical queries), blocking the change from being implemented, and/or providing a notification regarding the change and its impact to one or more relevant entities.

This summary is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

### BRIEF DESCRIPTION OF THE DRAWINGS

The present technology is described in detail below with reference to the attached drawing figures, wherein:
FIG. 1 is a block diagram illustrating an exemplary system in accordance with some implementations of the present disclosure;
FIG. 2 is a block diagram illustrating tracking and storing historical query information in a query store in accordance with some implementations of the present disclosure;
FIG. 3 is a block diagram illustrating change validation for a federated system in accordance with some implementations of the present disclosure;
FIG. 4 is a flow diagram showing a method for tracking and storing data regarding historical queries for a federated system in accordance with some implementations of the present disclosure;
FIG. 5 is a flow diagram showing a method for validating a change to a subgraph service and/or gateway of a federated system in accordance with some implementations of the present disclosure;
FIG. 6 is a flow diagram showing a method for performing a query plan evaluation for a historical query given one or more changes to a subgraph service and/or gateway of a federated system in accordance with some implementations of the present disclosure; and
FIG. 7 is a block diagram of an exemplary computing environment suitable for use in implementations of the present disclosure.

### DETAILED DESCRIPTION

### Overview

While federated systems provide a powerful tool for building distributed and scalable APIs, there are a number of problems encountered with updates to federated systems. In particular, maintenance of federated systems often involves changes to the gateway, such as gateway library or code version updates, and changes to the back-end subgraph services, such as the addition of new subgraph services, removal of existing subgraph services, and modifications to existing subgraph services, as well as the addition/removal/modification of subgraph directives. Each of these updates has the potential to be a breaking change that impacts the ability to process existing queries. In some instances, changes can result in decreased performance (e.g., increased computer resource consumption, increased latency) for some existing queries; while in other instances, changes result in the federated system no longer being able to process some existing queries altogether. For instance, if a change to a subgraph schema of one subgraph service breaks an interdependency with a subgraph schema of another subgraph service, the change could result in the federated system not being able to run existing queries that rely on the interdependency.

There have been some limited attempts to address the problems posed by changes to federated systems. For instance, one solution tracks field usage in subgraph schemas and provides a report when there is an attempt to rename or delete fields that are in use. However, this solution only provides notices of field changes and does not address whether and to what extent the changes will impact existing queries. Additionally, the solution does not address potential problems introduced by gateway changes. As a result, changes to federated systems continue to be difficult to manage.

Aspects of the technology described herein improve the functioning of the computer itself by providing a system that determines whether changes to a federated system (e.g., changes to the gateway and/or subgraph services) will break queries - i.e., cause queries to no longer run and/or impact query performance. The determination can be performed at build-time before the changes are implemented into the runtime federated system. If the updates are breaking changes that impact the ability to perform certain queries, the changes can be blocked from implementation.

In accordance with some aspects of the technology described herein, queries received from client devices and processed by the federated system are persisted to a query store as historical queries. Query plans used to run those queries are also persisted to the query store as historical query plans. In some instances, query metadata regarding the historical queries (e.g., issuing application, associated API, frequency of use of the query, recency of use of the query, query type, query owner, etc.) are also persisted to the query store.

When a change to the gateway or a subgraph service is received, an evaluation is performed at build-time (e.g., prior to implementing the changes in the federated system) to determine if the change will break the historical queries. For each historical query, it is determined whether a new query plan can be generated based on the change. If not, the change may be blocked and a notification provided to the development team implementing the change, an administrator of the federated system, and/or the query owner. If a new query plan can be generated for a given historical query, the new query plan is compared against the historical query plan for that historical query, and an action is performed based on the comparison. For instance, if the new query plan matches the historical query plan or the new query plan will not impact performance, the change can be allowed (at least with respect to that historical query). Alternatively, if the new query plan does not match the historical query plan and/or the new query plan will impact query performance, the change can be blocked and a notification provided to the development team implementing the change, an administrator of the federated system, and/or the query owner.

Aspects of the technology described herein provide a number of improvements over existing federated system management approaches. For instance, aspects of the present technology allow for the determination of whether and to what extent updates to a federated system are breaking changes that impact the ability of the federated system to process existing queries. Query plan evaluations performed in accordance with aspects of the technology described herein allow for the assessment to be performed on any type of change to the federated system. In accordance with some aspects, the system not only determines that a change will impact query performance but also an extent to which that query performance will be impacted. Moreover, notifications provided to relevant entities can provide information regarding the breaking change and associated query metadata that allows for guided analysis of whether to implement the change regardless of its impact. For instance, if the query is one that is no longer needed, was a test query, or is not frequently used, a decision could be made to implement the change. In some instances, the information provided in the notification can facilitate the development team in modifying the changes and/or the query owner in modifying the existing query. In this way, resources are conserved in the management of federated systems.

### Example Federated System with Breaking Change Detection

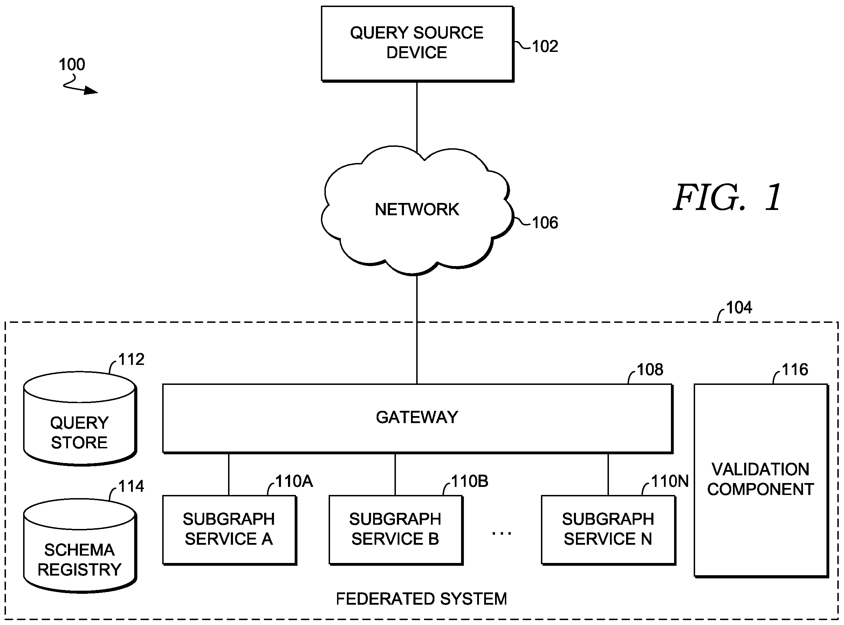

With reference now to the drawings, FIG. 1 is a block diagram illustrating an exemplary system 100 in accordance with some implementations of the present disclosure. It should be understood that this and other arrangements described herein are set forth only as examples. Other arrangements and elements (e.g., machines, interfaces, functions, orders, and groupings of functions, etc.) can be used in addition to or instead of those shown, and some elements can be omitted altogether. Further, many of the elements described herein are functional entities that can be implemented as discrete or distributed components or in conjunction with other components, and in any suitable combination and location. Various functions described herein as being performed by one or more entities can be carried out by hardware, firmware, and/or software. For instance, various functions can be carried out by a processor executing instructions stored in memory.

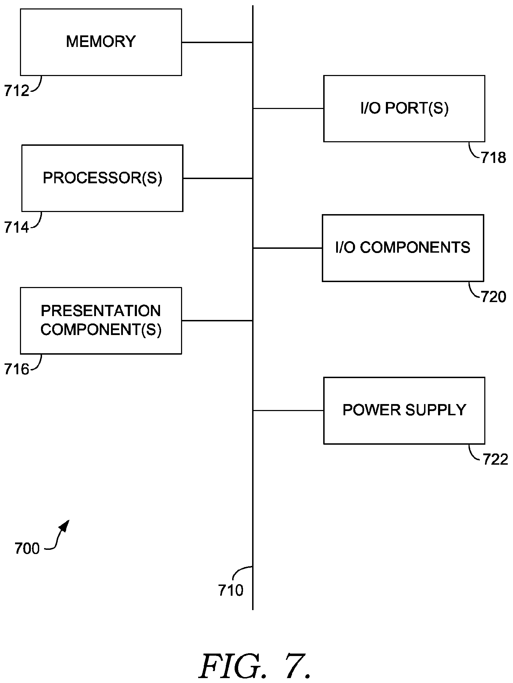

The system 100 is an example of a suitable architecture for implementing certain aspects of the present disclosure. Among other components not shown, the system 100 includes a query source device 102 and a federated system 104. Each of the query source device 102 and components of the federated system 104 shown in FIG. 1 can comprise one or more computer devices, such as the computing device 700 of FIG. 7, discussed below. As shown in FIG. 1, the query source device 102 and the federated system 104 can communicate via a network 106, which can include, without limitation, one or more local area networks (LANs) and/or wide area networks (WANs). Such networking environments are commonplace in offices, enterprise-wide computer networks, intranets, and the Internet. It should be understood that any number of devices can be employed within the system 100 within the scope of the present technology. Each can comprise a single device or multiple devices cooperating in a distributed environment. For instance, the federated system 104 could be provided by multiple devices collectively providing the functionality of the federated system 104 as described herein. Additionally, other components not shown can also be included within the network environment.

The federated system 104 provides an architecture for building distributed and scalable APIs. At a high level, the federated system 104 processes queries from query source devices, such as the query source device 102, and returns responses to the query source devices. The query source device 102 can comprise any device that initiates a query to the federated system 104. For instance, the query source device 102 could be a user device or other device having a web application, mobile application, or other application that acts as a consumer of an API provided via the federated system 104. While only a single query source device 102 is shown in FIG. 1 for simplicity purposes, it should be understood that the federated system 104 can service queries from any number of query source devices.

As shown in FIG. 1, the federated system 104 includes a gateway 108 that coordinates and optimizes queries from query source devices, such as the query source device 102, across a number of subgraph services 110A-110N. The subgraph services 110A-110N comprise back-end services that encapsulate different data and/or functionality for servicing queries from query source devices. For instance, the federated system 104 could have subgraph services for user data, product data, promotions data, and so on. While FIG. 1 shows only three subgraph services 110A, 110B, 110N for simplicity purposes, it should be understood that the federated system 104 can include any number of subgraph services.

Each of the subgraph services 110A-110N exposes its own subgraph schema that defines the data stored by the subgraph service and how to query that data. The subgraph schemas from the various subgraph services 110A-110N are composed into a supergraph schema that is stored in a schema registry 114. The supergraph schema provides a unified schema used by the gateway 108 for orchestrating queries across the subgraph services 110A-110N.

The gateway 108 serves as an intermediary between query source devices, such as the query source device 102, and the subgraph services 110A-110N. When the gateway 108 receives a query from a query source device, the gateway 108 processes the query using the supergraph schema from the schema registry 114. For instance, the gateway 108 can use the supergraph schema to understand how to process the query across the relevant subgraph services. In some instances, this can include generating a query plan based on the supergraph schema and executing the query plan across one or more of the subgraph services 110A-110N. The query plan can specify which subgraph services need to be queried and how the results should be combined. After generating a query plan, the gateway 108 can send subqueries to the appropriate subgraph services. Each subgraph service processes its subquery and returns the results that are combined into a response that is provided, for instance, to the query source device submitting the query.

In accordance with some aspects of the technology described herein, the federated system 104 tracks and records information regarding queries in a query store 112. For instance, the federated system 104 can store a query received and processed by the gateway 108 as a historical query in the query store 112. The federated system 104 can also store a query plan generated for the query as a historical query plan in the query store 112. The federated system can further store query metadata for the query in the query store 112. The query metadata for a query can comprise a variety of information useful when validating changes to the federated system 104. By way of example only and not limitation, the query metadata can include information identifying an application initiating the query, an API, a query owner (e.g., an entity responsible for maintaining the application or API), an entity submitting the query (e.g., an end user or a developer), a type of query (e.g., a test query submitted by developer or a query submitted by an application), frequency of use of the query (e.g., a count of times the query has been received and processed by the federated system 104 over a period of time), and recency of use of the query (e.g., a timestamp when the query was last received and processed by the federated system).

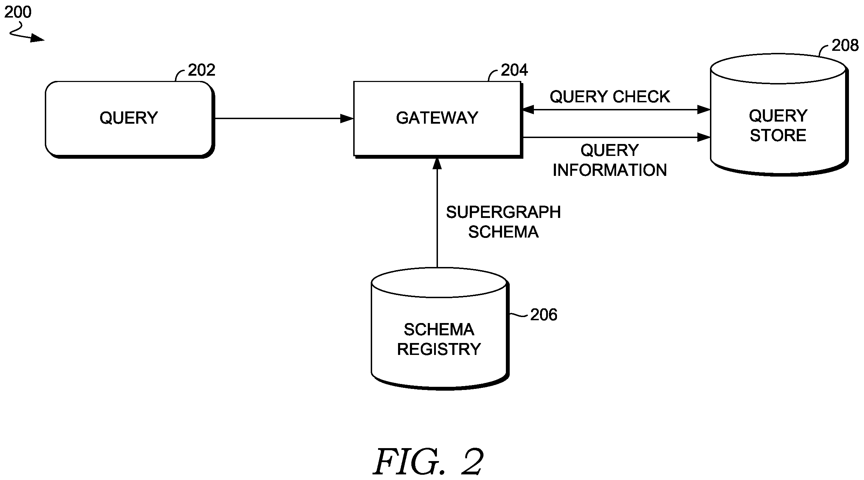

FIG. 2 is a block diagram illustrating a process 200 for tracking and storing historical query information in a query store. As shown in FIG. 2, a query 202 is received at a gateway 204 (which can correspond to the gateway 108 of FIG. 1). The query 202 can be submitted by a query source device (such as the query source device 102 of FIG. 1), for instance, via an API call. Based on the query 202, the gateway 204 can store various query information in the query store 208 (which can correspond to the query store 112 of FIG. 1).

In some configurations, the gateway 204 processes the query 202 based on whether the gateway 204 has previously processed other queries matching the current query 202. For instance, the gateway 204 can initially perform a query check on the query store 208 to determine if a query matching the query 202 has previously been processed by the gateway or otherwise stored in the query store 208 as a historical query with an associated historical query plan.

In instances in which the query 202 does not match a historical query in the query store 208, the gateway 204 accesses a supergraph schema from a schema registry 206 (which can correspond to the schema registry 114 of FIG. 1) and uses the supergraph schema to generate a query plan for the query 202. The query 202 is stored in the query store 208 as a historical query, and the query plan generated by the gateway 204 is stored in the query store 208 as a historical query plan in association with the historical query. Query metadata can also be stored in the query store 208 in association with the historical query. The query metadata can comprise, for instance, information identifying an application initiating the query, an API, a query owner, an entity submitting the query, a type of query, a count of times the query has been received (in the case in which the query is first seen, the count is initialized), and a timestamp associated with when the query was received/processed by the gateway 204.

In some instances in which the query 202 matches a historical query in the query store 208 that has an associated historical query plan, the gateway 204 can use the historical query plan to process the query 202 as opposed to generating a new query plan. In such instances, the gateway 204 can update the query metadata stored in the query store 208 in association with the historical query based on the instance of the query 202. As noted above, the query metadata could include, for instance, information identifying an application initiating the query, an API, a query owner, an entity submitting the query, a type of query, an update of the count of times the query has been received, and a timestamp associated with when the query was received/processed by the gateway 204. In other instances in which the query 202 matches a historical query in the query store 208, the gateway 204 uses the supergraph schema to generate a query plan to process the query 202 as opposed to using the associated historical query plan from the query store 208. For instance, changes to the federated system since the query was last processed can dictate the generation of a new query plan. In such instances, the new query plan is stored as the historical query plan in the query store 208, and the query metadata is updated.

With reference again to FIG. 1, the federated system 104 also comprises a validation component 116. The validation component 116 evaluates changes to the federated system 104 (e.g., before they are implemented) to determine whether and/or to what extent the changes will impact the ability of the federated system 104 to process queries from query source devices, such as the query source device 102.

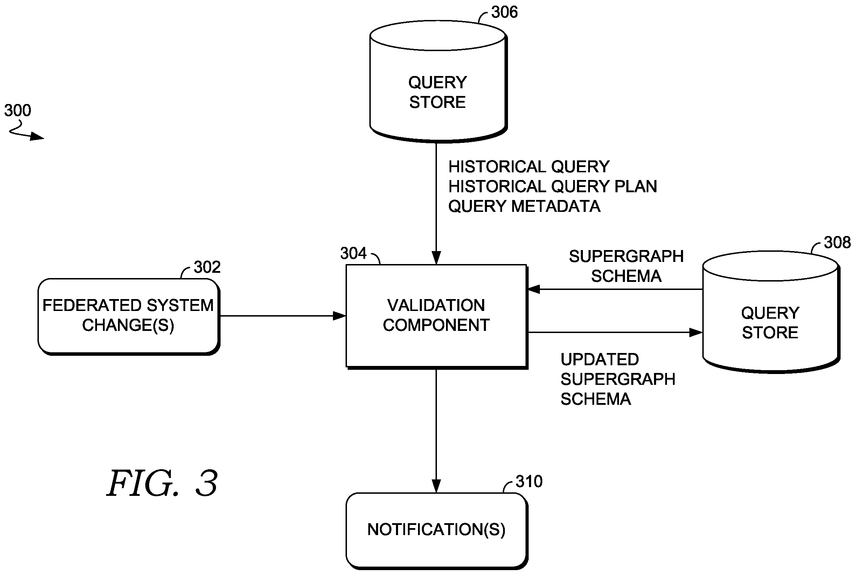

FIG. 3 is a block diagram illustrating of a process 300 for validating a change for a federated system. As shown in FIG. 3, one or more changes 302 to a federated system are received at a validation component 304 (which can correspond to the validation component 116 of FIG. 1. The change(s) 302 can be submitted to the validation component 304, for instance, via a pipeline employed by development teams for maintaining the federated system. Among other things, the change(s) 302 can include changes to a gateway (e.g., the gateway 108 of FIG. 1) and/or changes to one or more subgraph services (e.g., the subgraph services 1 10A-1 10N of FIG. 1). For instance, changes to the gateway could include a gateway library update or a gateway code upgrade (e.g., logic used by the gateway to generate query plans for queries). Changes to the subgraphs services could include, for instance, an addition of a new subgraph service (and its associated subgraph schema), removal of an existing subgraph service, or modification of an existing subgraph service (e.g., adding/removing a field from a subgraph schema, changing field dependencies within a subgraph schema or between subgraph schemas, etc.), as well as an addition/removal/modification of a subgraph directive.

The validation component 304 evaluates the change(s) 302 to determine whether and/or to what extent the change(s) 302 will impact processing of queries by the federated system. In particular, the validation component 304 evaluates the change(s) 302 against historical queries stored in the query store 306 (which can correspond to the query store 112 of FIG. 1). For a given historical query, the validation component 304 accesses the historical query and its associated historical query plan from the query store 306. The validation component 304 attempts to generate a new query plan for the historical query based on the change(s) 302. For instance, if a change to a subgraph schema is received, the validation component 304 generates a new supergraph schema based on the changed subgraph schema, and attempts to generate the new query plan using the new supergraph schema. As another example, if gateway code upgrade is received, the validation component accesses the existing supergraph schema from the schema registry 308 (which can correspond to the schema registry 114 of FIG. 1) and attempts to generate the new query plan using the existing supergraph schema and the new gateway code.

In some instances, the change(s) 302 prevent the validation component 304 from being able to generate a new query plan. In such instances, the validation component 304 can cause the change(s) 302 to be blocked from implementation in the federated system and/or cause one or more notification(s) 310 to be sent to relevant entities.

In other instances, the validation component 304 is able to generate a new query plan for the historical query based on the change(s). In such instances, the validation component 304 compares the new query plan against the historical query plan associated with the historical query. If the new query plan matches the historical query plan, implementation of the change(s) 302 will not impact processing of the historical query. Alternatively, if the new query plan does not match the historical query plan, the validation component 304 evaluates the performance impact of the new query plan and selects an action based on the performance impact.

In some configurations, the validation component 304 evaluates the performance impact of the new query plan based on a comparison of the query performance of the new query plan against the query performance of the historical query plan. In other configurations, the validation component 304 evaluates the performance impact of the new query plan based on the query performance of the new query plan without regard to the query performance of the historical query plan. Query performance of a query plan can be determined, for instance, based on how computationally expensive it is to run the query plan (e.g., in terms of resource consumption such as processor usage, memory usage, bandwidth consumption, and I/O requirements) and/or length of time required to process the query plan.

The validation component 304 selects an action based on the performance impact of the new query plan. In some aspects, the validation component 304 compares the performance impact of the new query plan against one or more thresholds. For instance, in the case of a single threshold being used, if the performance impact of the new query is below the threshold, the performance impact is determined to be acceptable such that the change(s) 302 can be implemented with respect to this historical query. Alternatively, if the performance impact of the new query exceeds the threshold, the validation component 304 can cause the change(s) 302 to be blocked from implementation in the federated system and/or cause one or more notification(s) 310 to be sent to relevant entities.

The notification(s) 310 sent to relevant entities when a new query plan cannot be generated based on the change(s) 302 and/or a new query plan adversely impacts query performance, the notification(s) 310 could be electronically communicated over a network to a device of a developer/development team submitting the change(s) 302, an administrator of the federated system, and/or a query owner associated with the query. The notification(s) 310 can include, for instance, information identifying the historical query and information indicating that the change(s) 302 would prevent the federated system from being able to process the historical query and/or the change(s) would impact query performance. The notification(s) 310 can also include query metadata associated with the historical query from the query store 306. The notification(s) 310 provide information that allow the relevant entities to determine whether to implement the change(s) 302 in the federated system despite the impact on the ability to process the query. For example, the query owner could determine that the performance impact is acceptable, such that the change(s) can be implemented. As another example, the query owner could decide to update the application such that the query is no longer used or such that a different query is used. In some configurations, the notification(s) 310 provides one or more user interface elements that allow a receiving entity to determine whether to approve or reject the change(s) 310 being implemented in the federated system. The notification(s) 310 can further provide information regarding the breaking change that facilitates addressing the issue, such information that assists the development team in modifying the change and/or the query owner in updating an application submitting the query.

The process of the validation component 304 evaluating the impact of the change(s) 302 on query processing can be performed on any number of historical queries in the query store 306. In some configurations, the query plan evaluation is performed for all historical queries in the query store 306, while in other configurations, the query plan evaluation is performed for a subset of the historical queries in the query store 306. For instance, the query plan evaluation could be performed on a sampling of historical query plans (e.g., random sampling). In some configurations, whether a query plan evaluation is performed for a given historical query can be based on the query metadata associated with that historical query. For example, if the query metadata associated with a historical query indicates that the historical query was a test query, the historical query has not been used over a threshold period of time, or the frequency of use of the historical query does not meet a threshold, the system could determine not to perform a query plan evaluation for that historical query.

In cases in which the validation component 304 determines the change(s) 302 do not impact any historical queries that are evaluated and/or relevant entities approve the change(s) 302 despite an impact for one or more historical queries, the validation component 304 causes the change(s) to be implemented in the federated system. In instances of gateway changes, the gateway is updated. In instances of subgraph service changes, an updated supergraph schema is stored in the schema registry 308.

### Example Methods for Breaking Change Detection in Federated Systems

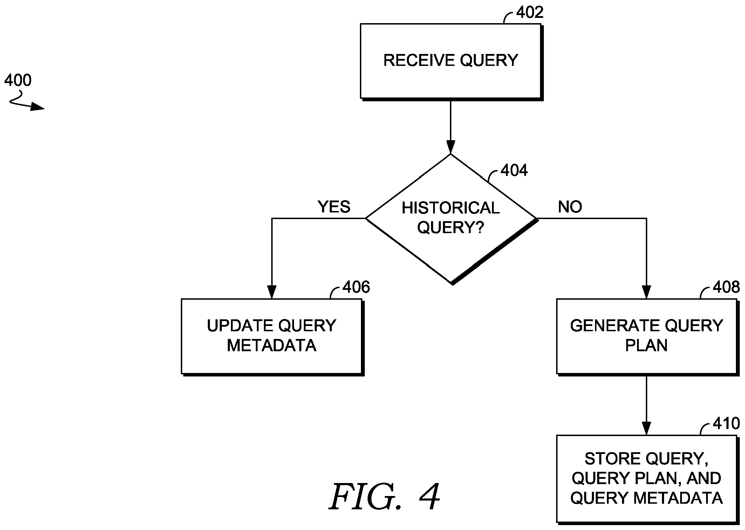

With reference now to FIG. 4, a flow diagram is provided that illustrates a method 400 for tracking and storing data regarding historical queries for a federated system. The method 400 can be performed, for instance, by the federated system 104 of FIG. 1. Each block of the method 400 and any other methods described herein comprises a computing process performed using any combination of hardware, firmware, and/or software. For instance, various functions can be carried out by a processor executing instructions stored in memory. The methods can also be embodied as computer-usable instructions stored on computer storage media. The methods can be provided by a standalone application, a service or hosted service (standalone or in combination with another hosted service), or a plug-in to another product, to name a few.

As shown at block 402, a query from a source device is received at a gateway of a federated system. A determination is made at block 404 regarding whether the query has been previously received and processed by the federated system. For instance, a query store (e.g., the query store 112 of FIG. 1) could be accessed to determine if the query received at block 402 matches a historical query in the query store.

If the query received at block 402 is determined to match a historical query, query metadata for the historical query is updated in the query store, as shown at block 406. For instance, the query metadata could include a timestamp of when the query was received, an update of a count of times the query has been received, as well as additional information regarding the query. In some instances, a new query plan is generated by the gateway that differs from the historical query plan associated with the historical query in the query store. In such instances, the new query plan is also stored in the query store.

As shown at block 408, if the query received at block 402 is determined to not match a historical query, a new query plan is generated for the query. The query, the query plan, and query metadata are stored in the query store at block 410. In particular, the query is stored as a historical query, and the query plan is stored as a historical query plan corresponding to the historical query. The query metadata stored for the historical query could include, for instance, the query metadata could include a timestamp of when the query was received, an initialization of a count of times the query has been received, a type of query, a query owner, an application issuing the query, and/or an associated API.

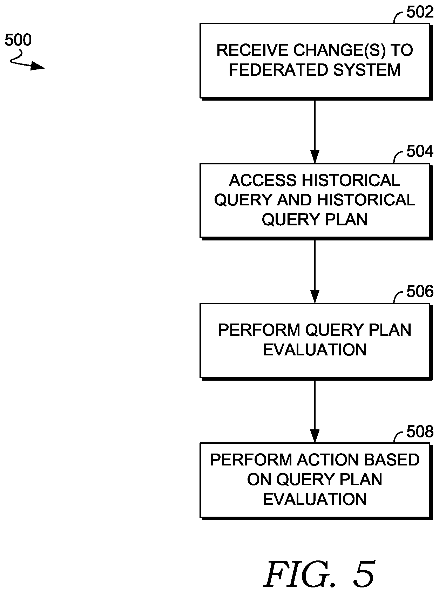

Turning next to FIG. 5, a flow diagram is provided illustrating a method 500 for validating a change to a subgraph service and/or gateway of a federated system. The method 500 can be performed for instance, by the validation component 116 of FIG. 1. In some aspects, the method 500 is performed at build time when a change to the federated system is submitted by a development team before the change is implemented in the federated system.

As shown in FIG. 502, one or more changes to a federated system are received. The change(s) could be submitted by a developer/development team attempting to update the federated system. The change(s) could include, for instance, an addition of a new subgraph service (and its associated subgraph schema), a removal of an existing subgraph service, a modification of an existing subgraph service (e.g., adding/removing a field from a subgraph schema, changing field dependencies within a subgraph schema or between subgraph schemas, etc.) an addition/removal/modification of a subgraph directive, a gateway library update, and a gateway code upgrade (e.g., logic used by the gateway to generate query plans for queries).

A historical query and a corresponding historical query plan are accessed from a query store (e.g., the query store 112 of FIG. 1), as shown at block 504. The historical query is a query from a source device that has been received by the federated system and stored in the query store. The corresponding historical query plan is the query plan that was generated by the gateway and stored in the query stored. In some instances, query metadata for the historical query is also accessed from the query stored. In some aspects, the query metadata is used to select whether to evaluate the historical query.

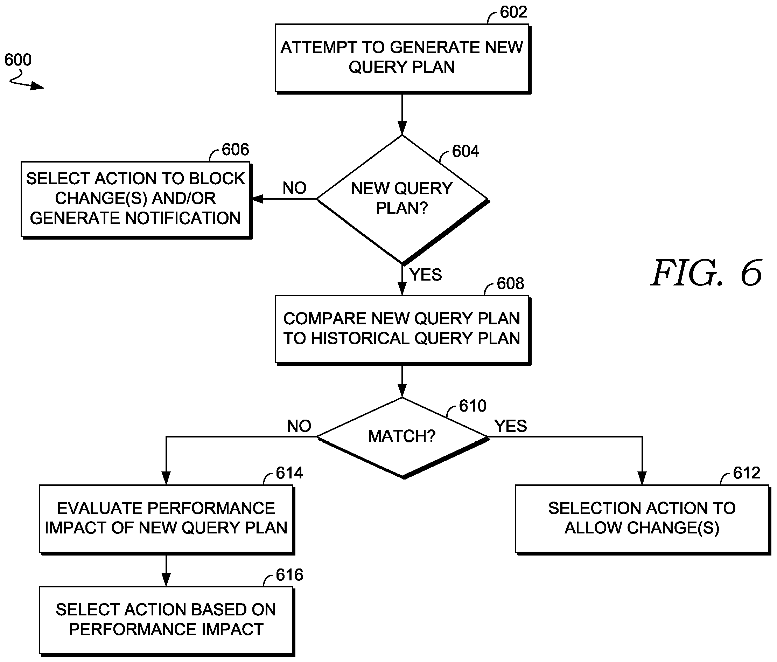

As shown at block 506, a query plan evaluation is performed for the historical query based on the one or more changes received at block 502. The query plan evaluation could comprise performing the method 600 described below with reference to FIG. 6. Generally, the query plan evaluation can include evaluating whether a new query plan can be generated for the historical query, and if a new query plan be generated, whether and/or to what extent the new query plan will impact performance. For instance, in the case in which a change received at block 502 is a change to a subgraph schema, a new supergraph schema is generated based on the subgraph schema and used to attempt to generate a new query plan. In the case of a change to the gateway of the federated system, such as a library update or code upgrade, a new query plan is generated using the updated library or code upgrade.

An action is taken at block 508 based on the query plan evaluation performed at block 506. The various actions that can be taken based on the query plan evaluation include: blocking implementation of the change(s) received at block 502; allowing implementation of the change(s) received at block 502 (conditional upon evaluation other historical queries); providing a notification to a developer/development team submitting the change(s); providing a notification to an administrator of the federated system; and providing a notification of a query owner associated with the historical query. When a notification is generated, the notification could identify various information, such as, for instance, an indication of the historical query, an indication of the change(s), whether a new query plan can be generated, whether a new query plan impacts performance (and/or an extent of performance impact), aspects that impact whether a new query can be generated and/or that impact query performance, and/or query metadata for the historical query retrieved from the query store. In some aspects, the notification could provide one or more user interface elements that allow a developer/administrator/query owner to select whether to allow or block implementation of the change(s) in the federated system.

Although FIG. 5 illustrates a process for a single historical query, the method 500 could be performed for any number of historical queries from the query store. In some instances, historical queries are selected for evaluation based on query metadata associated with each historical query. For instance, one or more rules could be employed that dictate whether to evaluate a historical query based on its associate query metadata. As an example to illustrate, a rule could be established such that certain types of queries (e.g., a test query) are not evaluated, such that any historical query having query metadata indicating the historical query is one of those query types will not be evaluated.

FIG. 6 provides a flow diagram showing a method 600 for performing a query plan evaluation for a historical query given one or more changes to a subgraph service and/or gateway of a federated system. For instance, the method 600 could be performed at block 506 within the context of the method 500. The method 600 can be performed for instance, by the validation component 116 of FIG. 1.

As shown at block 602, given one or more changes to a federated system (e.g., change(s) received at block 502 of the method 500), an attempt to generate a new query plan for a historical query (e.g., the historical query accessed from the query store at block 504 of the method 500) is performed. A determination is made at block 604 regarding whether a new query plan can be generated for the historical query given the change(s) to the federated system.

As shown at block 606, if a new query plan cannot be generated, an action based on that determination is selected. For instance, the selected action could comprise blocking the change(s) from being implemented in the federated system, and/or creating a notification that a new query plan cannot be generated and providing the notification to the developer/development team submitting the change(s), an administrator of the federated system, and/or a query owner of the historical query.

Alternatively, if a new query plan can be generated, as shown at block 608, the new query plan is compared to the historical query plan associated with the historical query (e.g., the historical query plan accessed from the query store at block 504 of the method 500). A determination is made at block 610 regarding whether the new query plan matches the historical query plan.

If the new query plan matches the historical query plan, an action to allow implementation of the change(s) to the federated system is selected (subject to query plan evaluations for other historical queries), as shown at block 612. Alternatively, if the new query plan does not match the historical query plan, the performance impact of the new query plan is evaluated, as shown at block 614.

An action is selected based on the performance impact evaluation, as shown at block 616. For instance, if the performance impact is below a threshold, an action to implement the change(s) to the federated system could be selected. Alternatively, if the performance impact is above a threshold, an action to block the change(s) to the federated system could be selected. In addition to blocking or allowing implementation of the change(s), the selected action could include creating a notification regarding the new query plan that is provided to the developer/development team submitting the change(s), an administrator of the federated system, and/or a query owner for the historical query being evaluated.

Similar to the comment above for the method 500, although FIG. 6 illustrates a query plan evaluation process for a single historical query, the method 600 could be performed for any number of historical queries from the query store. In some instances, historical queries are selected for evaluation based on query metadata associated with each historical query.

### Exemplary Operating Environment

Having described implementations of the present disclosure, an exemplary operating environment in which embodiments of the present technology can be implemented is described below in order to provide a general context for various aspects of the present disclosure. Referring initially to FIG. 7 in particular, an exemplary operating environment for implementing embodiments of the present technology is shown and designated generally as computing device 700. Computing device 700 is but one example of a suitable computing environment and is not intended to suggest any limitation as to the scope of use or functionality of the technology. Neither should the computing device 700 be interpreted as having any dependency or requirement relating to any one or combination of components illustrated.

The technology can be described in the general context of computer code or machine-useable instructions, including computer-executable instructions such as program modules, being executed by a computer or other machine, such as a personal data assistant or other handheld device. Generally, program modules including routines, programs, objects, components, data structures, etc., refer to code that perform particular tasks or implement particular abstract data types. The technology can be practiced in a variety of system configurations, including hand-held devices, consumer electronics, general-purpose computers, more specialty computing devices, etc. The technology can also be practiced in distributed computing environments where tasks are performed by remote-processing devices that are linked through a communications network.

With reference to FIG. 7, computing device 700 includes bus 710 that directly or indirectly couples the following devices: memory 712, one or more processors 714, one or more presentation components 716, input/output (I/O) ports 718, input/output components 720, and illustrative power supply 722. Bus 710 represents what can be one or more busses (such as an address bus, data bus, or combination thereof). Although the various blocks of FIG. 7 are shown with lines for the sake of clarity, in reality, delineating various components is not so clear, and metaphorically, the lines would more accurately be grey and fuzzy. For example, one can consider a presentation component such as a display device to be an I/O component. Also, processors have memory. The inventors recognize that such is the nature of the art, and reiterate that the diagram of FIG. 7 is merely illustrative of an exemplary computing device that can be used in connection with one or more embodiments of the present technology. Distinction is not made between such categories as "workstation," "server," "laptop," "hand-held device," etc., as all are contemplated within the scope of FIG. 7 and reference to "computing device."

Computing device 700 typically includes a variety of computer-readable media. Computer-readable media can be any available media that can be accessed by computing device 700 and includes both volatile and nonvolatile media, removable and non-removable media. By way of example, and not limitation, computer-readable media can comprise computer storage media and communication media.

Computer storage media includes both volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 700. Computer storage media does not comprise signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 712 includes computer storage media in the form of volatile and/or nonvolatile memory. The memory can be removable, non-removable, or a combination thereof. Exemplary hardware devices include solid-state memory, hard drives, optical-disc drives, etc. Computing device 700 includes one or more processors that read data from various entities such as memory 712 or I/O components 720. Presentation component(s) 716 present data indications to a user or other device. Exemplary presentation components include a display device, speaker, printing component, vibrating component, etc.

I/O ports 718 allow computing device 700 to be logically coupled to other devices including I/O components 720, some of which can be built in. Illustrative components include a microphone, joystick, game pad, satellite dish, scanner, printer, wireless device, etc. The I/O components 720 can provide a natural user interface (NUI) that processes air gestures, voice, or other physiological inputs generated by a user. In some instance, inputs can be transmitted to an appropriate network element for further processing. A NUI can implement any combination of speech recognition, touch and stylus recognition, facial recognition, biometric recognition, gesture recognition both on screen and adjacent to the screen, air gestures, head and eye-tracking, and touch recognition associated with displays on the computing device 700. The computing device 700 can be equipped with depth cameras, such as, stereoscopic camera systems, infrared camera systems, RGB camera systems, and combinations of these for gesture detection and recognition. Additionally, the computing device 700 can be equipped with accelerometers or gyroscopes that enable detection of motion.

The present technology has been described in relation to particular embodiments, which are intended in all respects to be illustrative rather than restrictive. Alternative embodiments will become apparent to those of ordinary skill in the art to which the present technology pertains without departing from its scope.

Having identified various components utilized herein, it should be understood that any number of components and arrangements can be employed to achieve the desired functionality within the scope of the present disclosure. For example, the components in the embodiments depicted in the figures are shown with lines for the sake of conceptual clarity. Other arrangements of these and other components can also be implemented. For example, although some components are depicted as single components, many of the elements described herein can be implemented as discrete or distributed components or in conjunction with other components, and in any suitable combination and location. Some elements can be omitted altogether. Moreover, various functions described herein as being performed by one or more entities can be carried out by hardware, firmware, and/or software, as described below. For instance, various functions can be carried out by a processor executing instructions stored in memory. As such, other arrangements and elements (e.g., machines, interfaces, functions, orders, and groupings of functions) can be used in addition to or instead of those shown.

Embodiments described herein can be combined with one or more of the specifically described alternatives. In particular, an embodiment that is claimed can contain a reference, in the alternative, to more than one other embodiment. The embodiment that is claimed can specify a further limitation of the subject matter claimed.

The subject matter of embodiments of the technology is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" can be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further, the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technology are described with reference to a distributed computing environment; however, the distributed computing environment depicted herein is merely exemplary. Components can be configured for performing novel embodiments of embodiments, where the term "configured for" can refer to "programmed to" perform particular tasks or implement particular abstract data types using code. Further, while embodiments of the present technology can generally refer to the technical solution environment and the schematics described herein, it is understood that the techniques described can be extended to other implementation contexts.

From the foregoing, it will be seen that this technology is one well adapted to attain all the ends and objects set forth above, together with other advantages which are obvious and inherent to the system and method. It will be understood that certain features and subcombinations are of utility and can be employed without reference to other features and subcombinations. This is contemplated by and is within the scope of the claims.

## Claims

1. One or more computer storage media storing computer-useable instructions that, when used by a computing device, cause the computing device to perform operations, the operations comprising:
receiving a change to a federated system;
accessing a first historical query from a query store storing a plurality of historical queries received by the federated system;
performing a query plan evaluation for the first historical query based on the change to the federated system; and
causing an action to be performed for the change based on the query plan evaluation.

2. The one or more computer store media of claim 1, wherein the change to a federated system comprises a change to a gateway of the federated system, a change to an existing subgraph service of the federated system, or an addition of a new subgraph service to the federated system.

3. The one or more computer storage media of claim 1 or 2,
wherein the operations further comprise:
storing the plurality of historical queries in the query store;
storing, in association with each historical query from the plurality of historical queries, a corresponding historical query plan; and
storing, in association with each historical query from the plurality of historical queries, corresponding query metadata, wherein the corresponding query metadata for the first historical query comprises information indicative of one or more selected from the following: an application initiating the first historical query, an API associated with the first historical query, a frequency of use of the first historical query, a recency of use of the first historical query, a query type of the first historical query, and a query owner associated with the first historical query,
wherein the operations may further comprise:
evaluating query metadata associated with the first historical query in the query store; and
determining to perform the query plan evaluation for the first historical query based on the evaluating.

4. The one or more computer storage media of any one of the preceding claims, wherein performing the query plan evaluation for the first historical query based on the change to the federated system comprises determining a new query plan cannot be generated for the first historical query based on the change to the federated system; and
wherein causing the action to be performed based on the query plan evaluation comprises one or more selected from the following: blocking the change to the federated system, providing a first notification to a developer attempting to make the change to the federated system, and providing a second notification to a query owner of the first historical query.

5. The one or more computer storage media of any one of the preceding claims, wherein performing the query plan evaluation for the first historical query based on the change to the federated system comprises:
generating a new query plan for the first historical query based on the change to the federated system,
performing a comparison of the new query plan and a first historical query plan associated with the first historical query, and
determining, based on the comparison, the new query plan matches the first historical query plan; and
wherein causing the action to be performed based on the query plan evaluation comprises allowing the change to the federated system to be implemented based on determining the new query plan matches the first historical query plan.

6. The one or more computer storage media of any one of the preceding claims,
wherein performing the query plan evaluation for the first historical query based on the change to the federated system comprises:
generating a new query plan for the first historical query based on the change to the federated system,
performing a comparison of the new query plan and a first historical query plan associated with the first historical query,
determining, based on the comparison, the new query plan differs from the first historical query plan, and
determining a performance impact associated with the new query plan; and
wherein causing the action to be performed based on the query plan evaluation comprises selecting the action based on the performance impact associated with the new query plan;
wherein causing the action to be performed based on the query plan evaluation may comprise:
when the performance impact satisfies a threshold, performing one or more selected from the following: blocking the change to the federated system, providing a first notification to a developer attempting to make the change to the federated system, and providing a second notification to a query owner of the first historical query; and
when the performance impact does not satisfy the threshold, allowing the change to the federated system to be implemented.

7. The one or more computer storage media of any one of the preceding claims, wherein causing the action to be performed based on the query plan evaluation comprises one or more selected from the following: providing a first notification to a developer attempting to make the change to the federated system, and providing a second notification to a query owner of the first historical query; and
wherein the first notification and/or the second notification comprises information regarding query metadata for the first historical query, the query metadata for the first historical query comprising one or more selected from the following: an application initiating the first historical query, an API associated with the first historical query, a frequency of use of the first historical query, a recency of use of the first historical query, a query type of the first historical query, and a query owner associated with the first historical query.

8. A computer-implemented method comprising:
receiving a change to a gateway or a subgraph service of a federated system;
accessing, from a query store, a plurality of historical queries previously received by the federated system;
performing a query plan evaluation for each historical query from the plurality of historical queries based on the change to the gateway or the subgraph service of the federated system; and
causing an action to be performed for the change based on the query plan evaluations for the plurality of historical queries.

9. The computer-implemented method of claim 8, wherein the method further comprises:
storing the plurality of historical queries in the query store;
storing, in association with each historical query from the plurality of historical queries, a corresponding historical query plan;
storing, in association with each historical query from the plurality of historical queries, corresponding query metadata, wherein the corresponding query metadata for each historical query comprises information indicative of one or more selected from the following: an application initiating the historical query, an API associated with the historical query, a frequency of use of the historical query, a recency of use of the historical query, a query type of the historical query, and a query owner associated with the historical query.

10. The computer-implemented method of claim 8 or 9, wherein the method further comprises:
evaluating query metadata associated with each historical query from the plurality of historical queries; and
determining to perform the query plan evaluation for each historical query from the plurality of historical queries based on the evaluating.

11. The computer-implemented method of claim 10,
wherein performing the query plan evaluation for a first historical query from the plurality of historical queries comprises determining a new query plan cannot be generated for the first historical query based on the change to the federated system; and
wherein causing the action to be performed based on the query plan evaluations comprises one or more selected from the following: blocking the change, providing a first notification to a developer attempting to make the change, and providing a second notification to a query owner of the first historical query;
wherein performing the query plan evaluation for a first historical query from the plurality of historical queries may comprise:
generating a new query plan for the first historical query based on the change,
performing a comparison of the new query plan and a first historical query plan associated with the first historical query, and
determining, based on the comparison, the new query plan matches the first historical query plan; and
wherein causing the action to be performed based on the query plan evaluations may comprise allowing the change to the federated system to be implemented based on determining the new query plan matches the first historical query plan.

12. The computer-implemented method of any one of claims 8 to 10,
wherein performing the query plan evaluation for a first historical query from the plurality of historical queries comprises:
generating a new query plan for the first historical query based on the change to the federated system;
performing a comparison of the new query plan and a first historical query plan associated with the first historical query,
determining, based on the comparison, the new query plan differs from the first historical query plan, and
determining a performance impact associated with the new query plan; and
wherein causing the action to be performed based on the query plan evaluations comprises selecting the action based on the performance impact associated with the new query plan;
wherein causing the action to be performed based on the query plan evaluations may comprise:
when the performance impact satisfies a threshold, performing one or more selected from the following: blocking the change to the federated system, providing a first notification to a developer attempting to make the change to the federated system, and providing a second notification to a query owner of the first historical query; and
when the performance impact does not satisfy the threshold, allowing the change to the federated system to be implemented.

13. A computer system comprising:
one or more processors; and
one or more computer storage media storing computer-useable instructions that, when used by the one or more processors, causes the one or more processors to perform operations comprising:
receiving a change to a federated system;
accessing a first historical query from a query store storing a plurality of historical queries received by the federated system;
performing a query plan evaluation for the first historical query based on the change to the federated system; and
determining to block the change based on the query plan evaluation.

14. The computer system of claim 13, wherein performing the query plan evaluation for the first historical query comprises:
determining a new query plan cannot be generated based on the change to the federated system.

15. The computer system of claim 13 or 14,
wherein performing the query plan evaluation for the first historical query comprises:
generating a new query plan based on the change to the federated system; and
determining a performance impact of the new query plan;
wherein the performance impact of the new query plan may be determined based on determining the new query plan does not match a first historical query plan associated with the first historical query in the query store.
